# EUROPÄISCHE PATENTSCHRIFT

(11) **EP 1 095 808 B1**
(45) Veröffentlichungstag und Bekanntmachung des Hinweises auf die Patenterteilung: **22.03.2006**
(21) Anmeldenummer: 00122986.3
(22) Anmeldetag: 23.10.2000
(51) Int. Cl.: B60J 10/12, B60J 10/00

(54) **Dichtungselement zur Verwendung in Fahrzeugen**
Sealing element for use in vehicles
Elément d'étanchéité pour l'utilisation dans des véhicules

(30) Priorität: 29.10.1999 DE 19952399
(43) Veröffentlichungstag der Anmeldung: 02.05.2001
(73) Patentinhaber: Webasto Vehicle Systems International GmbH, 82131 Stockdorf (DE)
(72) Erfinder: Hahn, Roland, 82110 Germering (DE); Schlenke, Martin, 82166 Gräfelfing (DE)
(74) Vertreter: Wiese, Gerhard

(56) Entgegenhaltungen:
- DE-A- 3 305 257
- DE-B- 2 838 447
- DE-U- 9 417 149
- DE-U- 29 720 683
- US-A- 3 641 707

## Beschreibung

Die vorliegende Erfindung betrifft ein Dichtungselement zur Verwendung in Fahrzeugen, insbesondere für öffnungsfähige Kraftfahrzeugdächer, welches einen Dichtungskörper aus Silikon umfaßt mit den Merkmalen des Oberbegriffs von Anspruch 1 und bekannt aus der US-A-3 641 707.

Im Automobilbereich sind Silikondichtungen bekannt, welche mit einem Steckfuß versehen sind, mittels welchem sie an der Verwendungsstelle eingesteckt werden können. Diese Befestigungsart bringt jedoch einen hohen Bauraumbedarf mit sich und ist insofern von Nachteil.

Aus DE-G 94 17 149 ist ein Dichtungselement mit einem Dichtungskörper aus elastischem Material bekannt, welches eine Klebefläche aufweist, mittels welcher es an der Unterseite des Deckels eines Schiebedachs, Hebedachs oder an dessen Rahmen befestigt wird. Die Klebefläche ist an einem Klebeband ausgebildet, welches mit seiner Rückseite an einem Grundkörper befestigt ist, der mit dem Dichtungskörper verbunden ist und aus einem steiferen Material als der Dichtungskörper besteht. Vor dem Befestigen der Dichtung ist die Klebefläche mit einer abziehbaren Schutzfolie geschützt.

Aus der **DE 297 20 683 U1** ist ein Dichtsystem mit einem Dichtungsprofil und einem Klebeband bekannt geworden, bei dem ein Dichtungsprofil an eine erste Kleberschicht eines doppelseitig klebefähigen Klebebandes angespritzt ist. Das Dichtungsprofil ist z. B. aus einem thermoplastischen Elastomer oder aus Weich-Polyvinylchlorid hergestellt. Die erste Kleberschicht besteht aus einem Reinacrylatkleber oder einem modifizierten Acrylatkleber, beispielsweise in der Art eines Heißschmelzklebers. Diese Materialien eignen sich nicht, um die an das Dichtungselement und dessen Kleberschicht gestellten hohen Anforderungen, wie sie bei bewegbaren Deckeln an Fahrzeugdächern auftreten, zu erfüllen.

Ähnliche Dichtungselemente sind ferner aus DE 197 20 713 C1 und EP 0 357 973 B1 bekannt. In DE 197 20 713 C1 ist dabei als bevorzugtes Material für den Dichtungskörper EPDM genannt. Dieses Material ist jedoch hinsichtlich Temperaturbeständigkeit, Rückstellverhalten, Dichteigenschaften und Anfrier- bzw. Verklebegefahr nicht optimal.

Es ist Aufgabe der vorliegenden Erfindung, ein Dichtungselement zur Verwendung in Fahrzeugen zu schaffen, welches einfach, bauraumgünstig und rasch an der Verwendungsstelle befestigt werden kann und dennoch gute

Eigenschaften hinsichtlich Temperaturbeständigkeit, Rückstellverhalten, Dichteigenschaften, Anfrier- und Verklebegefahr etc. aufweist. Diese Aufgabe wird durch die Merkmale des Auspruchs 1 gelöst.

Bei dieser erfindungsgemäßen Lösung ist vorteilhaft, daß der Dichtungskörper aus Silikon hervorragende Eigenschaften hinsichtlich Temperaturbeständigkeit, Rückstellverhalten, Dichtheit und Anfrier- und Verklebegefahr aufweist und dennoch das Dichtungselement rasch einfach und mit geringem Bauraumbedarf an der Verwendungsstelle angebracht werden kann, während beispielsweise bei direkter Verklebung des Dichtungskörpers an der Verwendungsstelle mittels Silikonkleber aufgrund der dadurch bedingten langen Aushärtzeit keine Verwendung in der Serienproduktion ermöglichen würde. Die Erfindung überwindet ein Vorurteil der Fachwelt, gemäß dem die Vorteile einer Silikondichtung nicht mit einer einfachen Montage unter Verwendung einer an der Dichtung vorgesehenen selbstklebenden Klebfläche vereinbar seien.

In bevorzugter Ausgestaltung der Erfindung wird die Klebefläche beispielsweise von einem Acrylatklebstoff gebildet und wird vor dem Befestigen der Dichtung von einer abziehbaren Schutzfolie geschützt. Femer ist die Klebefläche vorzugsweise planar ausgebildet und erfindungsgemäß an dem Trägerelement vorgesehen, das seinerseits an dem Dichtungskörper angeklebt ist, wobei diese Verklebung von einem Silikonkleber gebildet ist. Das Trägerelement wird vorzugsweise von einem flexiblen Band gebildet, wobei sich die Klebefläche im wesentlichen über die ganze Länge des Dichtungskörpers erstrecken kann. Bei dem Dichtungskörper handelt es sich vorzugsweise um ein langgestrecktes Extrusionsprofil, welches einen Hohlraum umschließen kann.

Im folgenden ist eine Ausführungsform der Erfindung anhand der beigefügten Zeichnung beispielhaft näher erläutert, welche einen Querschnitt durch ein erfindungsgemäßes Dichtungselement zeigt.

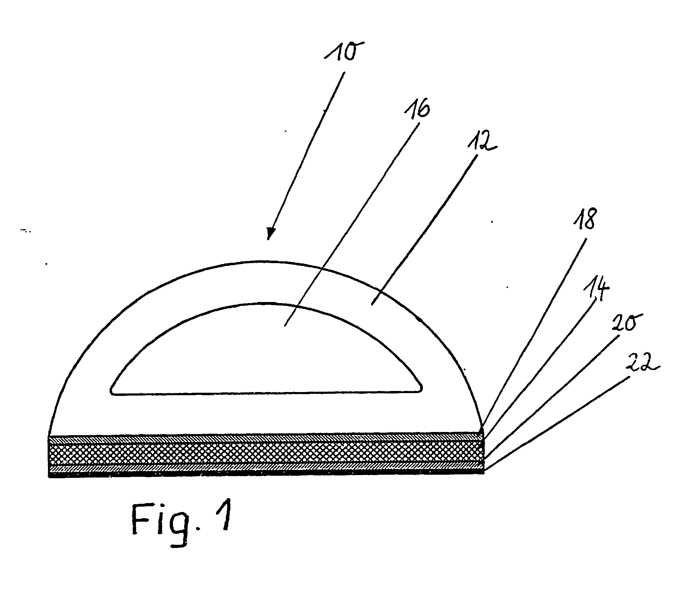

Dabei zeigt die einzige Figur 1 ein Dichtungselement 10, welches einen Dichtungskörper 12, der von einem langgestreckten Extrusionsprofil aus Silikon gebildet wird, sowie ein flexibles Trägerband 14 umfaßt. Das Profil 12 umschließt einen Hohlraum 16, wobei die Unterseite des Profils 12 über die ganze Länge und Breite planar ausgebildet ist. Das Trägerband 14 ist mittels einer Schicht 18 aus Silikonkleber über die ganze Länge und Breite an der Unterseite des Profils 12 angeklebt. An der von dem Profil 12 abgewandten Seite des Trägerbands 14 ist eine selbstklebende Klebefläche 20 vorgesehen, die zum Befestigen des Dichtungselements 10 an der Verwendungsstelle dient. Die Klebefläche 20 ist vor dem Befestigen des Dichtungselements 10 an der Verwendungsstelle von einer Schutzfolie 22 geschützt, die bei der Montage dann abgezogen wird. Das Material der Klebefläche 20 wird in Abhängigkeit von dem Haftgrund an der Verwendungsstelle gewählt, wobei vorzugsweise ein Acrylat-Klebstoff verwendet wird. Die Klebefläche 20 erstreckt sich vorzugsweise über die gesamte Länge und Breite der Unterseite des Profils 12 und ist im wesentlichen planar ausgebildet.

Das beschriebene Dichtungselement 10 wird vorzugsweise zur Abdichtung eines öffnungsfähigen Fahrzeugdachs, wie beispielsweise eines Schiebedachs, Hebedachs, Schiebe-Hebe-Dachs oder Spoilerdachs verwendet, wobei es beispielsweise an der Unterseite des Deckels oder am Rahmen desselben befestigt werden kann.

Die vorliegende Erfindung schafft ein Dichtungselement, welches gute Eigenschaften hinsichtlich Temperaturbeständigkeit, Rückstellverhalten, Dichteigenschaften, Anfriergefahr etc. aufweist und dennoch auf einfache und rasche Weise an der Verwendungsstelle befestigt werden kann, indem weder Steckverbindungen, welche einen relativ großen Bauraum und Montageaufwand erfordern, noch Silikonkleber, welcher eine lange Aushärtzeit mit sich bringt, verwendet werden.

### Bezugszeichenliste

- 10: Dichtungselement
- 12: Dichtungskörper (Profil)
- 14: Trägerband
- 16: Hohlraum
- 18: Schicht (aus Silikonkleber)
- 20: selbstklebende Klebefläche
- 22: Schutzfolie

## Patentansprüche

1. Dichtungselement zur Verwendung in Fahrzeugen, welches einen Dichtungskörper (12) aus Silikon umfaßt, wobei das Dichtungselement (10) mit einer selbstklebenden Klebefläche (20) zum Befestigen an der Verwendungsstelle versehen ist,
**dadurch gekennzeichnet, daß** die Klebefläche (20) an einem Trägerelement (14) vorgesehen ist, das seinerseits an dem Dichtungskörper (12) angeklebt ist,
und daß die Verklebung zwischen dem Trägerelement (14) und dem Dichtungskörper (12) von einem Silikonkleber (18) gebildet wird.

2. Dichtungselement nach Anspruch 1, **dadurch gekennzeichnet, daß** die Klebefläche (20) von einem Acrylat-Klebstoff gebildet wird.

3. Dichtungselement nach Anspruch 1 oder 2, **dadurch gekennzeichnet, daß** die Klebefläche (20) vor dem Befestigen des Dichtungselements (10) von einer abziehbaren Schutzfolie (22) geschützt wird.

4. Dichtungselement nach einem der Ansprüche 1 bis 3, **dadurch gekennzeichnet, daß** das Trägerelement (14) von einem flexiblen Band gebildet wird.

5. Dichtungselement nach einem der vorhergehenden Ansprüche, **dadurch gekennzeichnet, daß** sich die Klebefläche (20) im wesentlichen über die ganze Länge des Dichtungskörpers (12) erstreckt.

6. Dichtungselement nach einem der vorhergehenden Ansprüche, **dadurch gekennzeichnet, daß** die Klebefläche (20) im wesentlichen planar ausgebildet ist.

7. Dichtungselement nach einem der vorhergehenden Ansprüche, **dadurch gekennzeichnet, daß** es sich bei dem Dichtungskörper (12) um ein langgestrecktes Extrusionsprofil handelt.

8. Dichtungselement nach Anspruch 7, **dadurch gekennzeichnet, daß** das Profil (12) einen Hohlraum (16) umschließt.

9. Dichtungselement nach einem der vorhergehenden Ansprüche, **dadurch gekennzeichnet, daß** das Dichtungselement (10) zur Verwendung bei einem öffnungsfähigen Fahrzeugdach ausgebildet ist.

## Claims

1. sealing element for use in vehicles, which comprises a sealing body (12) made of silicone, the sealing element (10) being provided with a self-adhesive surface (20) for fixing at the point of use, **characterized in that** the adhesive surface (20) is provided on a carrier element (14) which, in turn, is adhesively bonded to the sealing body (12), and **in that** the adhesive bond between the carrier element (14) and the sealing body (12) is formed by a silicone adhesive (18).

2. Sealing element according to Claim 1, **characterized in that** the adhesive surface (20) is formed by an acrylic adhesive.

3. Sealing element according to Claim 1 or 2, **characterized in that**, before the sealing element (10) is fixed, the adhesive surface (20) is protected by a protective film (22) that can be pulled off.

4. Sealing element according to one of Claims 1 to 3, **characterized in that** the carrier element (14) is formed by a flexible tape.

5. Sealing element according to one of the preceding claims, **characterized in that** the adhesive surface (20) extends substantially over the entire length of the sealing body (12).

6. Sealing element according to one of the preceding claims, **characterized in that** the adhesive surface (20) is substantially planar.

7. Sealing element according to one of the preceding claims, **characterized in that** the sealing body (12) is an elongate extruded profile.

8. Sealing element according to Claim 7, **characterized in that** the profile (12) encloses a cavity (16).

9. Sealing element according to one of the preceding claims, **characterized in that** the sealing element (10) is designed for use in an openable vehicle roof.

## Revendications

1. Élément d'étanchéité pour une utilisation dans des véhicules, lequel comprend un corps d'étanchéité (12) en silicone, dans lequel l'élément d'étanchéité (10) est pourvu d'une surface autoadhésive (20) pour la fixation au lieu d'application, **caractérisé en ce que** la surface adhésive (20) est prévue sur un élément support (14) qui, de son côté, est collé au corps d'étanchéité (12), et **en ce que** le collage entre l'élément support (14) et le corps d'étanchéité (12) est formé par une colle silicone (18).

2. Élément d'étanchéité selon la revendication 1, **caractérisé en ce que** la surface adhésive (20) est formée par une matière adhésive acrylate.

3. Élément d'étanchéité selon la revendication 1 ou 2, **caractérisé en ce que** la surface adhésive (20) est protégée, avant la fixation de l'élément d'étanchéité (10), par un film protecteur pelliculable (22).

4. Élément d'étanchéité selon l'une quelconque des revendications 1 à 3, **caractérisé en ce que** l'élément support (14) est formé par une bande flexible.

5. Élément d'étanchéité selon l'une quelconque des revendications précédentes, **caractérisé en ce que** la surface adhésive (20) s'étend sur essentiellement toute la longueur du corps d'étanchéité (12).

6. Élément d'étanchéité selon l'une quelconque des revendications précédentes, **caractérisé en ce que** la surface adhésive (20) est conçue de manière essentiellement plane.

7. Élément d'étanchéité selon l'une quelconque des revendications précédentes, **caractérisé en ce que** le corps d'étanchéité (12) est un profilé d'extrusinn étendu en longueur.

8. Élément d'étanchéité selon la revendication 7, **caractérisé en ce que** le profilé (12) entoure une cavité (16).

9. Élément d'étanchéité selon l'une quelconque des revendications précédentes, **caractérisé en ce que** l'élément d'étanchéité (10) est conçu en vue d'être utilisé avec un toit ouvrant de véhicule automobile.
